# EUROPÄISCHE PATENTSCHRIFT

(11) **EP 1 614 339 B1**
(45) Veröffentlichungstag und Bekanntmachung des Hinweises auf die Patenterteilung: **15.07.2009**
(21) Anmeldenummer: 05010413.2
(22) Anmeldetag: 13.05.2005
(51) Int. Cl.: A01D 41/12

(54) **Gutverteileinrichtung**
Product distributing device
Dispositif distributeur de produits

(30) Priorität: 17.05.2004 DE 102004024799
(43) Veröffentlichungstag der Anmeldung: 11.01.2006
(73) Patentinhaber: CLAAS Selbstfahrende Erntemaschinen GmbH, 33428 Harsewinkel (DE)
(72) Erfinder: Baumgarten, Joachim Dr.-, 48361 Beelen (DE); Niermann, Martin, 33428 Harsewinkel (DE); Terörde, Stefan, 48231Warendorf (DE)

(56) Entgegenhaltungen:
- EP-A- 1 374 663
- DE-A1- 10 063 554
- US-A- 4 637 406
- US-A- 5 120 275

## Beschreibung

Die Erfindung betrifft eine Vorrichtung zum Verteilen von Erntegut, insbesondere eine Zerkleinerungseinrichtung mit nachgeordneten Leitelementen an einem Mähdrescher nach dem Oberbegriff des Anspruchs 1.

Aus der DE 100 63 554 ist ein Mähdrescher bekannt geworden. Das von den beiden Häckselvorrichtungen zerkleinerte Häckselgut wird zwei Gebläsen mit Wurfschaufeln zugeführt. Die Gebläse sind jeweils unterhalb der Häckselvorrichtungen angeordnet, wobei beide paarweise um dieselbe vertikale Achse rotieren. Die Drehzahl der Gebläse ist höher als die Drehzahl der Häckselvorrichtung gewählt, um die Wurfwirkung der Wurfschaufeln zu verbessern. Die Wurfschaufeln der Gebläse fördern das Häckselgut in Auswurfstutzen, die ihrerseits um vertikale Achsen schwenkbar sind.

Nachteilig bei dieser Vorrichtung ist, das die Wurfgebläse hohe Antriebskräfte zum Antrieb der Wurfschaufeln benötigen und das zusätzlich ein Schwenkantrieb für die Auswurfstutzen notwendig ist, damit das Häckselgut gleichmäßig auf dem Feld verteilt werden kann.

Die EP 1 374 663 A1 offenbart Leitelemente zum Verteilen von Erntegut an einem Mähdrescher, die als einzelne Leitschaufeln ausgebildet und an einem Gestell fixierbar sind. Durch die einzelnen im austretenden Gutstrom befindlichen Leitschaufeln wird dem Gutstrom kinetische Energie entzogen, da sich der Gutstrom an den Leitschaufeln jeweils in einzelne kleine Gutströme aufteilen muss, was ihn abbremst. Durch diesen Verlust an kinetischer Energie kann der Gutstrom nicht mehr auf eine große Breite verteilt werden, wodurch insbesondere bei sehr großen Schnittbreiten des Mähdreschers keine gleichmäßige Verteilung des Häckselgutes auf dem Feldboden erfolgen kann.

Der Erfindung liegt daher die Aufgabe zugrunde eine Vorrichtung der eingangs bezeichneten Art so auszubilden, das sie konstruktiv einfach und energiesparend ausgeführt ist.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass das wenigstens eine Leitelement in Bewegungsbahnen eines frei austretenden Gutstromes angeordnet ist, kann die kinetische Energie des Gutstroms verlustfrei auf das Leitelement übertragen werden.

Indem das wenigstens eine Leitelement eine integrierte Abrisskante aufweist, kann die Anzahl der Bauteile reduziert werden.

Damit das Leitelement einfach und damit ökonomisch herstellbar ist, ist es vorteilhafterweise als ein rotationssymmetrischer Hohlkörper mit einer Öffnung ausgeführt.

In vorteilhafter Weiterbildung der Erfindung bildet ein die Öffnung begrenzender glatter Rand des Hohlkörpers die Gutabrisskante, so dass ein kontinuierlicher Gutstromstrahl aus dem Hohlkörper austritt.

Weitere vorteilhafte Ausführungen der Erfindung ergeben sich, wenn der rotationssymmetrische Hohlkörper ein einer mathematischen Funktion folgender rotationssymmetrischer Hohlkörper wie beispielsweise ein Kegel, ein Kegelabschnitt, eine Kugelkalotte oder ein beliebig geformter rotationssymmetrischer Hohlkörper ist.

Eine besonders kostengünstige Ausführung der Erfindung ergibt sich, wenn das Leitelement eine Scheibe ist.

In einer weiteren Ausführung der Erfindung ist das Leitelement ein rotationsasymmetrischer Hohlkörper.

Um aus dem Häcksler austretende Häckselguthaufen aufzulösen, weist das Leitelement vorteilhafterweise eine profilierte Abrisskante auf.

Damit das Leitelement die kinetische Energie des frei austretenden Gutstroms aufnehmen kann und umgekehrt das Leitelement kinetische Energie auf den Gutstrom übertragen kann, ist das Leitelement drehbar gelagert.

Dadurch, das das Leitelement aktiv oder passiv angetrieben wird und dabei um eine Drehachse rotiert, wird die Reibung zwischen Gutstrom und Leitelement reduziert.

Die Drehachse ist vorteilhafterweise neigungsverstellbar, damit der aus dem Strohhäcksler austretende Gutstrom in jeder Lage des Hohlkörpers auf der Innenseite des Hohlkörpers auftrifft.

Um unterschiedliche Streubilder beim Verteilen des Gutstromes mit demselben Leitelement zu erhalten, kann die Drehachse des rotationsymmetrischen Hohlkörpers bei verschiedenen Ausführungen der Erfindung vorteilhafterweise
- parallel zur Rotationssymmetrieachse des rotationssymmetrischen Hohlkörpers verlaufen;
- der Rotationssymmetrieachse des rotationssymmetrischen Hohlkörpers entsprechen;
- beabstandet von der Rotationssymmetrieachse des Hohlkörpers in einem Winkel zur Rotationssymmetrieachse des rotationssymmetrischen Hohlkörpers verlaufen;
- in einem Winkel zur Rotationssymmetrieachse des Hohlkörpers verlaufen und die Rotationssymmetrieachse des rotationssymmetrischen Hohlkörpers schneiden.

Dadurch, dass der aus dem Strohhäcksler austretender Häckselgutstrom auf der Innenseite des Hohlkörpers auftrifft, kann das Leitelement den Häckselgutstrom bis zu der Gutabrisskante auf einer Bahn führen, die der Kontur des Hohlkörpers folgt.

Die Lage der Drehachse des Leitelements bezüglich des Häckselgutstromes ist über Stellglieder räumlich einstellbar, damit das Häckselgut auch bei Hangfahrten gleichmäßig verteilt wird und die Streubreite an die Breite des Schneidwerks angepasst werden kann.

Um das Häckselgut auf der kompletten Streubreite zu verteilen, sind mehrere Leitelemente in Bewegungsbahnen des frei austretenden Gutstromes angeordnet.

Weitere vorteilhafte Ausführungen sind Gegenstand weiterer Unteransprüche und werden an Hand eines in mehreren Figuren dargestellten Ausführungsbeispiels beschrieben.

### Es zeigen:

- Fig.1: den hinteren Teil eines Mähdreschers mit Anbauhäcksler und Förderelementen in der Seitenansicht,
- Fig.2a: ein als Kegel ausgeführtes erfindungsgemäßes Leitelement;
- Fig.2b: ein als Kegelstumpf ausgeführtes erfindungsgemäßes Leitelement;
- Fig.2c: ein als beliebig geformter rotationssymmetrischer Hohlkörper ausgeführtes Leitelement;
- Fig.2d: ein als rotationsasymetrisch geformter Hohlkörper ausgeführtes Leitelement;
- Fig.2e: ein als Scheibe ausgeführtes Leitelement;
- Fig.2f: ein als Kugelkalotte ausgeführtes Leitelement mit einer profilierten Abrisskante;
- Fig.3a: eine Ansicht eines erfindungsgemäßen Leitelements;
- Fig.3b: ein Querschnitt eines erfindungsgemäßen Leitelements;

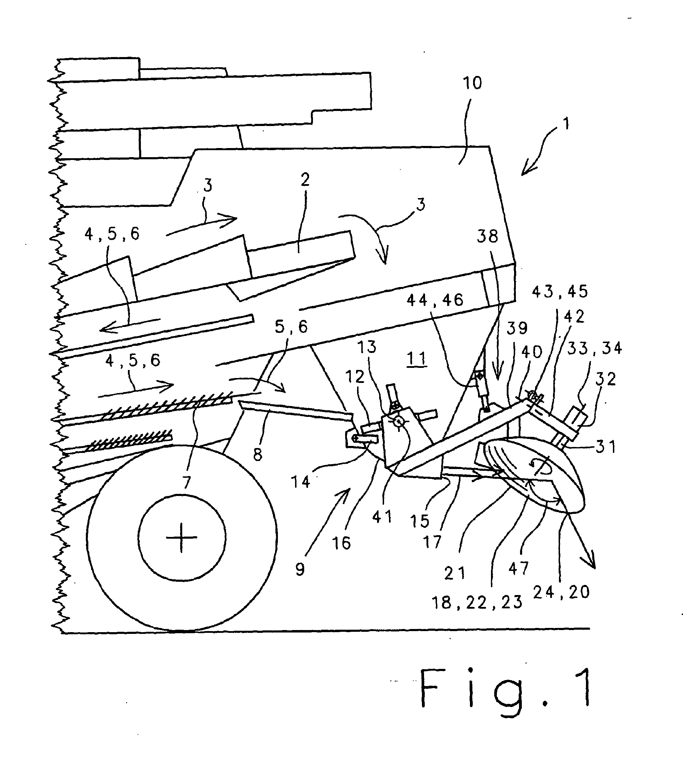

Fig.1 zeigt die Seitenansicht des hinteren Teils eines Mähdrescher 1. Über die Hordenschüttler 2 wird ein ausgedroschenes Stroh-Spreu-Gemisch 3 in den hinteren Bereich des Mähdreschers 1 gefördert, wobei die noch im Stroh-Spreu-Gemisch 3 befindlichen Körner 4 sowie evtl. Kurzstroh 5 und Spreu 6 abgetrennt werden. Die Körner 4, das Kurzstroh 5 und die Spreu 6 werden auf an sich bekannte Weise einer Siebeinrichtung 7 zugeführt. Gleichzeitig wird ein von einem nicht dargestellten Dreschwerk abgeschiedenes Korn-Spreu-Gemisch zu der Siebeinrichtung 7 gefördert. In der Siebeinrichtung 7 werden die Körner 4 vom Kurzstroh 5 und von der Spreu 6 getrennt. Der über die Siebvorrichtung 7 überlaufende im wesentlichen aus Kurzstroh 5 und Spreu 6 bestehende Siebüberlauf gelangt über einen Zuführboden 8 in einen Strohhäcksler 9, der unterhalb einer Strohausfallhaube 10 angeordnet ist. Auch das über die Hordenschüttler 2 bewegte Stroh-Spreu-Gemisch 3 sowie ein kleiner Anteil an Verlustkörnern fällt am Ende der Hordenschüttler 2 über die Strohausfallhaube 10 in den Strohhäcksler 9.

Der Strohhäcksler 9 besteht aus einem Häckslergehäuse 11 in dem eine mit Häckselmessern 12 besetzte, angetriebene Welle 13 gelagert ist. Die Häckselmesser 12 kämmen mit in dem Häckslergehäuse 11 starr befestigten Gegenmessern 14. Das Kurzstroh 5, die Spreu 6 und das Korn-Spreu-Gemisch 3 werden von dem Strohhäcksler 9 zerkleinert und beschleunigt. An der Unterseite des Strohhäckslers 9 begrenzt ein Bodenelement 16 eine Gutaustrittsöffnung 15, aus der der vom Strohhäcksler 9 zerkleinerter Gutstrom 17 annähernd horizontal austritt. Beabstandet hinter dem Strohhäcksler 9 ist erfindungsgemäß ein Leitelement 18 in Bewegungsbahnen des frei austretenden Gutstromes 17 angeordnet.

Das Leitelement 18 ist auf an späterer Stelle noch näher beschriebene Weise an dem Häckslergehäuse 9 verstellbar aufgehängt. In dem dargestellten Ausführungsbeispiel ist das Leitelement 18 ein mit einer Öffnung 21 versehener rotationssymmetrischer Hohlkörper 23, wobei ein die Öffnung 21 des Hohlkörpers 23 begrenzender glatter Rand 24 eine integrierte Gutabrisskante 20 des Leitelementes 18 bildet. Der rotationssymmetrische Hohlkörper 23 weist eine Rotationssymmetrieachse 34 auf zu der jeder Querschnitt des Hohlkörpers 23, der durch diese Rotationssymmetrieachse 34 verläuft, symmetrisch ist. Der rotationssymmetrische Hohlkörper 23 ist im dargestellten Ausführungsbeispiel als eine Kugelkalotte 22 ausgeführt.

Auf der Außenseite ist die Kugelkalotte 22 mit einer Antriebswelle 31 eines Motors 32 starr verbunden. Die Anordnung der Antriebswelle 31 an der Kugelkalotte 22 ist so gewählt, das die Kugelkalotte 22 um eine Drehachse 33 dreht, die der Rotationssymmetrieachse 34 der Kugelkalotte 18 entspricht. Es liegt im Rahmen der Erfindung, dass das Leitelement 18 in einer weiteren Ausführung auf an sich bekannte Weise mit einer in einem Lagergehäuse drehbar gelagerten Welle fest verbunden sein kann.

Es liegt weiterhin im Rahmen der Erfindung, dass die Drehachse 33 in alternativen Ausführungen der Erfindung parallel zur Rotationssymmetrieachse 34 des rotationssymmetrischen Hohlkörpers 23, beabstandet von der Rotationssymmetrieachse 34 des Hohlkörpers 23 in einem Winkel zur Rotationssymmetrieachse 34 des Hohlkörpers 23 oder in einem Winkel zur Rotationssymmetrieachse 34 des Hohlkörpers 23 verlaufen und die Rotationssymmetrieachse 34 des Hohlkörpers 23 schneiden kann.

Die Lage der Drehachse 33 zum Gutstrom 17 ist in jedem Fall so angeordnet, dass der Häckselgutstrom 17 beim Drehen des Leitelements 18 um die Drehachse 33 kontinuierlich auf der Innenseite der Kugelkalotte 22 auftrifft.

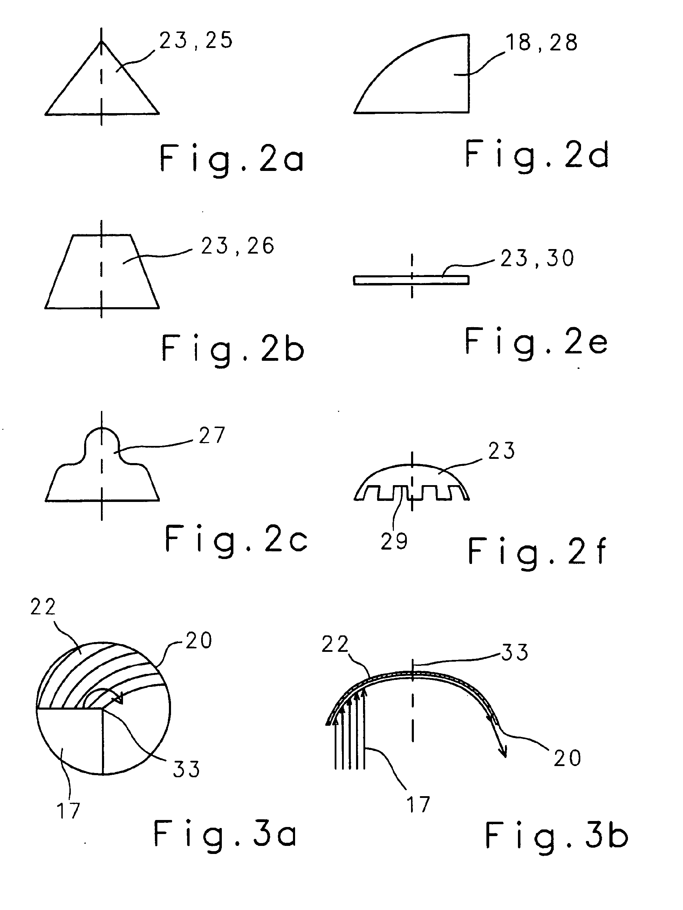

Es liegt im Rahmen der Erfindung, dass das Leitelement 18 ein einer mathematischen Funktion folgender rotationssymmetrischer Hohlkörper 23 wie zum Beispiel ein Kegel 25 (Fig. 2a), ein Kegelstumpf 26 (Fig. 2b) oder ein beliebig gestalteter rotationssymmetrischer Hohlkörper 27 (Fig. 2c) ist. Ebenso ist denkbar, das das Leitelement 18 ein rotationsasymmetrischer Hohlkörper 28 (Fig. 2d) sein kann. Ebenso ist es möglich, dass das Leitelement 18 als eine ebene Scheibe 30 (Fig.2e) ausgeführt ist. Das Leitelement 18 kann beispielsweise auch mit einer profilierten Abrisskante 29 (Fig. 2f) versehen sein.

Fig. 3a zeigt die erfindungsgemäße Kugelkalotte 22 mit Blick in die Öffnung 21. Der zwischen der Gutabrisskante 20 und der Drehachse 33 auf der Innenseite der Kugelkalotte 22 auftreffende Gutstrom 17 weist einen Querschnitt 37 auf, der in etwa einem Viertel der Grundfläche der Öffnung 21 entspricht. Der Gutstrom 17 wird in Drehrichtung der Drehachse 33 umgelenkt und tritt an der Gutabrisskante 20 aus der Kugelkalotte 22 aus.

Fig.3b zeigt einen Schnitt durch die erfindungsgemäße Kugelkalotte 22. Der auf die Kalotte 22 auftreffende Gutstrom 17 wird durch die Kugelkalotte 22 auf eine Kurvenbahn umgelenkt, die der Innenkontur der Kalotte 22 entspricht. An der Gutabrisskante 20 der Kugelkalotte 22 löst sich der Gutstrom von der Kalotte 22 und fliegt tangential zur Kurvenbahn weiter.

Die Verteilung des Gutstroms 17 kann bei konstanter Austrittsgeschwindigkeit des Gutstroms 17 aus dem Strohhäcksler 9 durch die Änderung der Drehzahl der Kalotte 22 verändert werden, da diese unmittelbar Einfluss auf die Austrittsgeschwindigkeit des Gutstroms 17 hat. Die Form und Größe der Kalotte 22 bestimmen die Richtung und den Zeitpunkt in der sich der Gutstrom 17 von der Kalotte 22 löst.

Fig. 1 zeigt die perspektivische Rückansicht auf den Mähdrescher 1 mit zwei als Kugelkalotte 22 ausgeführten Leitelementen 18, die an dem Häckslergehäuse 11 angeordnet sind. Der mit der Kugelkalotte 18 verbundene Motor 32 ist starr mit einem unteren Arm 42 verbunden. Der untere Arm 42 ist um eine erste Achse 40 drehbar mit einem oberen Arm 39 verbunden, der um eine zweite Achse 41 drehbar an dem Häckslergehäuse 11 angelenkt ist, wobei die Achsen 40, 41 rechtwinklig zueinander verlaufen. An dem oberen Arm 39 ist ein erstes Stellglied 43 angelenkt, mit dem die Kugelkalotte 22 quer zum Gutstrom 17 verstellt wird. An dem unteren Arm 42 ist ein zweites Stellglied 44 angelenkt, mit dem Kugelkalotte 22 in Richtung des Gutstroms 17 verstellt wird. Beide Stellglieder 43, 44 sind als doppelt wirkende Hydraulikzylinder 45, 46 ausgeführt. Die Lage der Kugelkalotte 22 bezüglich des Häckselgutstomes 17 bestimmt einen Umlenkwinkel 47 um den der aus dem Strohhäcksler 9 zugeführte Häckselgutstrom 17 von dem Leitelement 18 in horizontaler und/oder vertikaler Richtung umgelenkt wird. Die Stellglieder 43, 44 sind mit einer Steuereinheit 48 verbunden, die die Leitelemente 18 auf an sich bekannte Weise in Abhängigkeit von der Hangneigung in Fahrtrichtung des Mähdreschers 1 und der Hangneigung quer zur Fahrtrichtung des Mähdreschers 1 verstellt, damit eine gleichmäßige Verteilung des Gutstroms 17 über die gesamte Schnittbreite des Mähdreschers 1 sowohl in der Ebene als auch in Hanglagen erreicht wird.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Hordenschüttler
- 3: Stroh-Spreu-Gemisch
- 4: Körner
- 5: Kurzstroh
- 6: Spreu
- 7: Siebüberlauf
- 8: Zuführboden
- 9: Strohhäcksler
- 10: Strohausfallhaube
- 11: Häckslergehäuse
- 12: Häckselmesser
- 13: Welle
- 14: Gegenmesser
- 15: Gutaustrittsöffnung
- 16: Bodenelement
- 17: Gutstrom
- 18: Leitelemente
- 20: Gutabrisskante
- 21: Öffnung
- 22: Kugelkalotte
- 23: rotationssymmetrischer Hohlkörper
- 24: Rand
- 25: Kegel
- 26: Kegelstumpf
- 27: beliebig gestalteter rotationssymmetrischer Hohlkörper
- 28: rotationsassymmetrischer Hohlkörper
- 29: profilierte Abrisskante
- 30: ebene Scheibe
- 31: Antriebswelle
- 32: Motor
- 33: Drehachse
- 34: Rotationssymmetrieachse
- 35: Lagergehäuse
- 36: Welle
- 37: Querschnitt
- 38: Haltearm
- 39: oberer Arm
- 40: erste Achse
- 41: zweite Achse
- 42: unterer Arm
- 43: Erstes Stellglied
- 44: Zweites Stellglied
- 45: doppelt wirkender Hydraulikzylinder
- 46: doppelt wirkender Hydraulikzylinder
- 47: Umlenkwinkel

## Patentansprüche

1. Vorrichtung zum Verteilen von Erntegut mit nachgeordneten Leitelementen (18) an einem Mähdrescher (1), wobei das wenigstens eine Leitelement (18) in Bewegungsbahnen eines frei austretenden Gutstromes (17) angeordnet ist,
**dadurch gekennzeichnet,**
**dass** das Leitelement (18) ein rotationssymmetrischer Hohlkörper (23) mit einer Öffnung (21) oder ein rotationsasymmetrischer Hohlkörper (28) oder eine Scheibe (30) ist.

2. Vorrichtung zum Verteilen von Erntegut nach Anspruch 1,
**dadurch gekennzeichnet,**
**dass** das wenigstens eine Leitelement (18) eine integrierte Gutabrisskante (20) aufweist.

3. Vorrichtung zum Zerkleinern und Verteilen von Erntegut nach wenigstens einem der vorhergehenden Ansprüche,
**dadurch gekennzeichnet,**
**dass** ein die Öffnung (21) begrenzender glatter Rand (24) des Hohlkörpers (23) die Gutabrisskante (20) bildet.

4. Vorrichtung zum Verteilen von Erntegut nach wenigstens einem der vorhergehenden Ansprüche,
**dadurch gekennzeichnet,**
**dass** der rotationssymmetrische Hohlkörper (23) ein einer mathematischen Funktion folgender rotationssymmetrischer Hohlkörper wie beispielsweise ein Kegel (25), ein Kegelstumpf (26), eine Kugelkalotte (22) oder ein beliebig geformter rotationssymmetrischer Hohlkörper (27) ist.

5. Vorrichtung zum Verteilen von Erntegut nach Anspruch 1,
**dadurch gekennzeichnet,**
**dass** das Leitelement (18) eine profilierte Abrisskante (29) aufweist.

6. Vorrichtung zum Verteilen von Erntegut nach wenigstens einem der vorhergehenden Ansprüche,
**dadurch gekennzeichnet,**
**dass** das Leitelement (18) drehbar gelagert ist.

7. Vorrichtung zum Verteilen von Erntegut nach wenigstens einem der vorhergehenden Ansprüche,
**dadurch gekennzeichnet,**
**dass** das Leitelement (18) aktiv oder passiv angetrieben wird und dabei um eine Drehachse (33) rotiert.

8. Vorrichtung zum Verteilen von Erntegut nach wenigstens einem der vorhergehenden Ansprüche,
**dadurch gekennzeichnet,**
**dass** die Drehachse (33) neigungsverstellbar ist.

9. Vorrichtung zum Verteilen von Erntegut nach wenigstens einem der vorhergehenden Ansprüche,
**dadurch gekennzeichnet,**
**dass** die Drehachse (33) des rotationsymmetrischen Hohlkörpers (23) parallel zur Rotationssymmetrieachse (34) des rotationssymmetrischen Hohlkörpers (23) verläuft.

10. Vorrichtung zum Verteilen von Erntegut nach wenigstens einem der vorhergehenden Ansprüche,
**dadurch gekennzeichnet,**
**dass** die Drehachse (33) des rotationsymmetrischen Hohlkörpers (23) der Rotationssymmetrieachse (34) des rotationssymmetrischen Hohlkörpers (23) entspricht.

11. Vorrichtung zum Verteilen von Erntegut nach wenigstens einem der vorhergehenden Ansprüche,
**dadurch gekennzeichnet,**
**dass** die Drehachse (33) des rotationssymmetrischen Hohlkörpers (23) beabstandet von der Rotationssymmetrieachse (34) des Hohlkörpers (23) in einem Winkel zur Rotationssymmetrieachse (34) des rotationssymmetrischen Hohlkörpers (23) verläuft.

12. Vorrichtung zum Verteilen von Erntegut nach wenigstens einem der vorhergehenden Ansprüche,
**dadurch gekennzeichnet,**
**dass** die Drehachse (33) des rotationssymmetrischen Hohlkörpers (23) in einem Winkel zur Rotationssymmetrieachse (34) des Hohlkörpers (23) verläuft und die Rotationssymmetrieachse (34) des rotationssymmetrischen Hohlkörpers (23) schneidet.

13. Vorrichtung zum Verteilen von Erntegut nach wenigstens einem der vorhergehenden Ansprüche,
**dadurch gekennzeichnet,**
**dass** ein aus dem Strohhäcksler (9) austretender Häckselgutstrom (12) auf der Innenseite des Hohlkörpers (17) auftrifft.

14. Vorrichtung zum Verteilen von Erntegut nach wenigstens einem der vorhergehenden Ansprüche,
**dadurch gekennzeichnet,**
**dass** die Lage der Drehachse (33) des Leitelements (18) bezüglich des Gutstromes (17) über Stellglieder (43, 44) räumlich einstellbar ist.

15. Vorrichtung zum Verteilen von Erntegut nach wenigstens einem der vorhergehenden Ansprüche,
**dadurch gekennzeichnet,**
**dass** mehrere Leitelemente (18)) in Bewegungsbahnen des frei austretenden Gutstromes (17) angeordnet sind.

## Claims

1. Apparatus for distributing crop material having downstream-disposed guide elements (18) on a combine harvester (1), wherein the at least one guide element (18) is arranged in paths of movement of a freely issuing flow of material (17),
**characterised in that**
the guide element (18) is a rotationally symmetrical hollow body (23) with an opening (21) or a rotationally symmetrical hollow body (28) or a disc (30).

2. Apparatus for distributing crop material according to claim 1 **characterised in that** the at least one guide element (18) has an integrated material break-away edge (20).

3. Apparatus for comminuting and distributing crop material according to at least one of the preceding claims **characterised in that** a smooth edge (24), defining the opening (21), of the hollow body (23) forms the material break-away edge (20).

4. Apparatus for distributing crop material according to at least one of the preceding claims **characterised in that** the rotationally symmetrical hollow body (23) is a rotationally symmetrical hollow body which follows a mathematical function such as for example a cone (25), a truncated cone (26), a spherical segment (22) or a rotationally symmetrical hollow body (27) of any desired shape.

5. Apparatus for distributing crop material according to claim 1 **characterised in that** the guide element (18) has a profiled break-away edge (29).

6. Apparatus for distributing crop material according to at least one of the preceding claims **characterised in that** the guide element (18) is mounted rotatably.

7. Apparatus for distributing crop material according to at least one of the preceding claims **characterised in that** the guide element (18) is actively or passively driven and **in that** case rotates about an axis of rotation (33).

8. Apparatus for distributing crop material according to at least one of the preceding claims **characterised in that** the axis of rotation (33) is adjustable in inclination.

9. Apparatus for distributing crop material according to at least one of the preceding claims **characterised in that** the axis of rotation (33) of the rotationally symmetrical hollow body (23) extends parallel to the axis (34) of rotational symmetry of the rotationally symmetrical hollow body (23).

10. Apparatus for distributing crop material according to at least one of the preceding claims **characterised in that** the axis of rotation (33) of the rotationally symmetrical hollow body (23) corresponds to the axis (34) of rotational symmetry of the rotationally symmetrical hollow body (23).

11. Apparatus for distributing crop material according to at least one of the preceding claims **characterised in that** the axis of rotation (33) of the rotationally symmetrical hollow body (23) extends at a spacing from the axis (34) of rotational symmetry of the hollow body (23) at an angle to the axis (34) of rotational symmetry of the rotationally symmetrical hollow body (23).

12. Apparatus for distributing crop material according to at least one of the preceding claims **characterised in that** the axis of rotation (33) of the rotationally symmetrical hollow body (23) extends at an angle to the axis (34) of rotational symmetry of the hollow body (23) and intersects the axis (34) of rotational symmetry of the rotationally symmetrical hollow body (23).

13. Apparatus for distributing crop material according to at least one of the preceding claims **characterised in that** a flow of chopped material (12) issuing from a straw chopper (9) impinges on the inside of the hollow body (17).

14. Apparatus for distributing crop material according to at least one of the preceding claims **characterised in that** the position of the axis of rotation (33) of the guide element (18) is three-dimensionally adjustable with respect to the flow of material (17) by way of adjusting members (43, 44).

15. Apparatus for distributing crop material according to at least one of the preceding claims **characterised in that** a plurality of guide elements (18) are arranged in paths of movement of the freely issuing flow of material (17).

## Revendications

1. Dispositif pour éparpiller un produit de récolte avec des éléments de guidage (18) placés en aval sur une moissonneuse-batteuse (1), l'élément de guidage (18) au nombre d'au moins un étant disposé sur les trajectoires de déplacement d'un flux de produit (17) sortant librement, **caractérisé en ce que** l'élément de guidage (18) est un corps creux à symétrie de révolution (23) comportant une ouverture (21) ou un corps creux sans symétrie de révolution (28) ou un disque (30).

2. Dispositif pour éparpiller un produit de récolte selon la revendication 1, **caractérisé en ce que** l'élément de guidage (18) au nombre d'au moins un comporte une arête intégrée de décollement de produit (20).

3. Dispositif pour fractionner et éparpiller un produit de récolte selon au moins l'une des revendications précédentes, **caractérisé en ce qu'**un bord lisse (24) du corps creux (23) limitant l'ouverture (21) forme l'arête de décollement de produit (20).

4. Dispositif pour fractionner et éparpiller un produit de récolte selon au moins l'une des revendications précédentes, **caractérisé en ce que** le corps creux à symétrie de révolution (23) est un corps creux à symétrie de révolution suivant une fonction mathématique, comme par exemple un cône (25), un tronc de cône (26), une calotte sphérique (22) ou un corps creux à symétrie de révolution de forme quelconque (27).

5. Dispositif pour éparpiller un produit de récolte selon la revendication 1, **caractérisé en ce que** l'élément de guidage (18) comporte une arête de décollement profilée (29).

6. Dispositif pour éparpiller un produit de récolte selon au moins l'une des revendications précédentes, **caractérisé en ce que** l'élément de guidage (18) est monté tournant.

7. Dispositif pour éparpiller un produit de récolte selon au moins l'une des revendications précédentes, **caractérisé en ce que** l'élément de guidage (18) est entraîné activement ou passivement et tourne autour d'un axe de rotation (33).

8. Dispositif pour éparpiller un produit de récolte selon au moins l'une des revendications précédentes, **caractérisé en ce que** l'axe de rotation (33) est réglable en inclinaison.

9. Dispositif pour éparpiller un produit de récolte selon au moins l'une des revendications précédentes, **caractérisé en ce que** l'axe de rotation (33) du corps creux à symétrie de révolution (23) s'étend parallèlement à l'axe de symétrie de révolution (34) du corps creux à symétrie de révolution (23).

10. Dispositif pour éparpiller un produit de récolte selon au moins l'une des revendications précédentes, **caractérisé en ce que** l'axe de rotation (33) du corps creux à symétrie de révolution (23) correspond à l'axe de symétrie de révolution (34) du corps creux à symétrie de révolution (23).

11. Dispositif pour éparpiller un produit de récolte selon au moins l'une des revendications précédentes, **caractérisé en ce que** l'axe de rotation (33) du corps creux à symétrie de révolution (23) s'étend à distance de l'axe de symétrie de révolution (34) du corps creux (23) en formant un angle avec l'axe de symétrie de révolution (34) du corps creux à symétrie de révolution (23).

12. Dispositif pour éparpiller un produit de récolte selon au moins l'une des revendications précédentes, **caractérisé en ce que** l'axe de rotation (33) du corps creux à symétrie de révolution (23) s'étend en formant un angle avec l'axe de symétrie de révolution (34) du corps creux (23) et coupe l'axe de symétrie de révolution (34) du corps creux à symétrie de révolution (23).

13. Dispositif pour éparpiller un produit de récolte selon au moins l'une des revendications précédentes, **caractérisé en ce qu'**un flux de produit haché (12) sortant du hache-paille (9) atteint la face intérieure du corps creux (17).

14. Dispositif pour éparpiller un produit de récolte selon au moins l'une des revendications précédentes, **caractérisé en ce que** la position de l'axe de rotation (33) de l'élément de guidage (18) par rapport au flux de produit (17) est réglable dans l'espace au moyen d'actionneurs (43, 49).

15. Dispositif pour éparpiller un produit de récolte selon au moins l'une des revendications précédentes, **caractérisé en ce que** plusieurs éléments de guidage (18) sont disposés sur les trajectoires de déplacement du flux de produit (17) sortant librement.
